(19) Europäisches Patentamt
European Patent Office
Office européen des brevets

(11) EP 1 365 652 B1

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **02710800.0**

(22) Anmeldetag: **17.01.2002**

(51) Int Cl.:
***A01N 43/40*** *(2006.01)*

(86) Internationale Anmeldenummer:
**PCT/EP2002/000410**

(87) Internationale Veröffentlichungsnummer:
**WO 2002/056688 (25.07.2002 Gazette 2002/30)**

(54) **FUNGIZIDE MISCHUNGEN AUS BENZOPHENONEN UND N-BIPHENYLNIKOTINAMIDEN**

FUNGICIDAL MIXTURES FROM BENZOPHENONES AND N-BIPHENYL NICOTINAMIDES

MELANGES FONGICIDES CONTENANT DES BENZOPHENONES ET DES N-BIPHENYLNICOTINAMIDES

(84) Benannte Vertragsstaaten:
**AT BE CH CY DE DK ES FI FR GB GR IE IT LI LU MC NL PT SE TR**
Benannte Erstreckungsstaaten:
**LT LV RO**

(30) Priorität: **18.01.2001 DE 10102311**

(43) Veröffentlichungstag der Anmeldung:
**03.12.2003 Patentblatt 2003/49**

(73) Patentinhaber: **BASF SE**
**67056 Ludwigshafen (DE)**

(72) Erfinder:
- **EICKEN, Karl**
**67157 Wachenheim (DE)**
- **ROSE, Ingo**
**68159 Mannheim (DE)**
- **AMMERMANN, Eberhard**
**64646 Heppenheim (DE)**
- **STIERL, Reinhard**
**67112 Mutterstadt (DE)**
- **LORENZ, Gisela**
**67434 Hambach (DE)**
- **STRATHMANN, Siegfried**
**67117 Limburgerhof (DE)**
- **SCHERER, Maria**
**76829 Landau-Godramstein (DE)**
- **SCHELBERGER, Klaus**
**67161 Gönnheim (DE)**
- **HADEN, Egon**
**67259 Kleinniedesheim (DE)**
- **HAMPEL, Manfred**
**67435 Neustadt (DE)**

(56) Entgegenhaltungen:
**EP-A- 0 727 141** **EP-A- 0 897 904**
**EP-A- 0 899 255** **EP-A- 0 967 196**
**EP-A- 1 023 834** **WO-A-99/31951**
**WO-A-99/31976** **WO-A-99/31979**
**WO-A-99/31981** **WO-A-99/31983**
**WO-A-99/31984** **WO-A-99/31985**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft fungizide Mischungen, enthaltend

a) Benzophenone der Formel I,

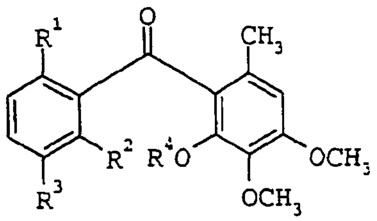

I

in der

$R^1$ für Chlor, Methyl, Methoxy, Acetoxy, Pivaloyloxy oder Hydroxy;

$R^2$ für Chlor oder Methyl;

$R^3$ für Wasserstoff, Halogen oder Methyl; und

$R^4$ für $C_1$-$C_6$-Alkyl oder Benzyl stehen, wobei der Phenylteil des Benzylrestes einen Halogen oder Methylsubstituenten tragen kann, und

b) Amidverbindungen der Formel II,

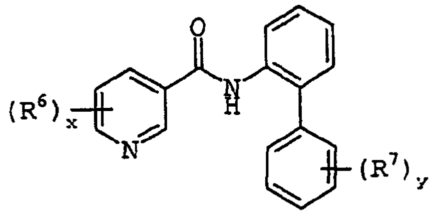

II

worin $R^5$ und $R^7$ gleich oder verschieden sind und für Halogen, Nitro, Cyano, $C_1$-$C_8$-Alkyl, $C_2$-$C_8$-Alkenyl, $C_2$-$C_8$-Alkinyl, $C_1$-$C_8$-Halagenalkyl, $C_2$-$C_8$-Halogenalkenyl, $C_2$-$C_8$-Halogenalkinyl, $C_1$-$C_8$-Alkoxy, $C_1$-$C_8$-Halogenalkocy, $C_1$-$C_8$-Alkylthio, $C_1$-$C_8$-Halogenalkylthio, $C_1$-$C_8$-Alkylsulfinyl oder $C_1$-$C_8$-Alkylsulfonyl stehen;

x 1, 2, 3 oder 4; und

y 1, 2, 3, 4 oder 5 bedeuten;

in einer synergistisch wirksamen Menge.

Außerdem betrifft die Erfindung Verfahren zur Bekämpfung von Schadpilzen mit Mischungen der Verbindungen I und II und in zwei Teilen konditionierte Mittel.

Die Verbindungen der Formel I, ihre Herstellung und ihre Wirkung gegen Schadpilze sind aus der Literatur bekannt (EP-A 727 141; EP-A 897 904; EP-A 899 255; EP-A 967 196).

Mischungen von Benzophenonen der Formel I mit anderen fungiziden Wirkstoffen sind aus EP-A 1 023 834 bekannt.

Ebenfalls bekannt sind die Amidverbindungen der Formel II, ihre Herstellung und ihre Wirkung gegen Schadpilze (EP-A 545 099).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierte Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die erfindungsgemäßen Mischungen wirken synergistisch und sind daher zur Bekämpfung von Schadpilzen und insbesondere von echten Mehltaupilzen in Getreide, Gemüse, Obst, Zierpflanzen und Reben besonders geeignet.

Die folgenden Verbindungen der Formel I sind als Mischungspartner bevorzugt, wobei die einzelnen Bevorzugungen für sich allein genommen und in Kombination zu lesen sind.

Bevorzugt sind Verbindungen I, in denen $R^1$ für Chlor, Methoxy, Acetoxy oder Hydroxy steht und insbesondere bevorzugt sind Verbindungen, in denen $R^1$ Methoxy, Acetoxy oder Hydroxy bedeutet. Ganz besonders bevorzugt sind Verbindungen, in denen $R^1$ Methoxybedeutet.

Erfindungsgemäß sind Mischungen enthaltend Verbindungen I, in denen $R^2$ Chlor oder Methyl bedeutet. Bevorzugt sind Verbindungen I, in denen $R^2$ Methyl bedeutet.

Außerdem sind Verbindungen I bevorzugt, in denen $R^3$ für Wasserstoff, Methyl, Chlor oder Brom und insbesondere bevorzugt für Wasserstoff, Chlor oder Brom steht.

Daneben sind Verbindungen I bevorzugt, in denen $R^4$ für $C_1$-$C_4$-Alkyl oder Benzyl stehen, wobei der Phenylteil des Benzylrestes einen Halogen oder Methylsubstituenten tragen kann. Insbesondere bevorzugt sind Verbindungen der Formel I, in der $R^4$ für $C_1$-$C_4$-Alkyl und vorzugsweise Methyl steht.

Weiterhin bevorzugt sind Verbindungen der Formel I, in der die Substituenten $R^1$, $R^2$, $R^3$ und $R^4$ die folgende Bedeutung haben:

$R^1$ Methoxy, Acetoxy oder Hydroxy;
$R^2$ Methyl;
$R^3$ Wasserstoff, Chlor oder Brom; und
$R^4$ $C_1$-$C_4$-Alkyl.

Daneben sind Verbindung der Formel I besonders bevorzugt, in denen die Substituenten die in der folgenden Tabelle gegebenen Bedeutungen haben:

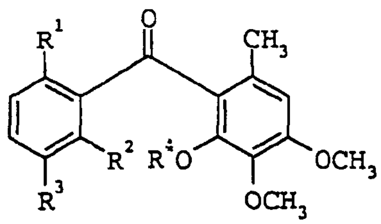

I

| Nr. | $R^1$ | $R^2$ | $R^3$ | $R^4$ |
|---|---|---|---|---|
| 1-1 | Methoxy | Cl | H | Methyl |
| 1-2 | Methoxy | Cl | Methyl | Methyl |
| 1-3 | Methoxy | Cl | H | n-Propyl |
| 1-4 | Methoxy | Cl | H | n-Butyl |
| 1-5 | Methoxy | Cl | H | Benzyl |
| 1-6 | Methoxy | Cl | H | 2-Fluorobenzyl |
| 1-7 | Methoxy | Cl | H | 3-Fluorobenzyl |
| 1-8 | Methoxy | Cl | H | 4-Fluorophenyl |
| 1-9 | Methoxy | Cl | H | 2-Methylphenyl |
| 1-10 | Methoxy | Cl | H | 3-Methylphenyl |
| I-11 | Methoxy | Cl | H | 4-Methylphenyl |
| 1-12 | Methoxy | Cl | Br | Methyl |

(fortgesetzt)

| Nr. | $R^1$ | $R^2$ | $R^3$ | $R^4$ |
|---|---|---|---|---|
| 1-13 | Methoxy | Cl | Br | n-Propyl |
| 1-14 | Methoxy | Cl | Br | n-Butyl |
| 1-15 | Methoxy | Cl | Br | Benzyl |
| 1-16 | Methoxy | Cl | Br | 2-Fluorobenzyl |
| 1-17 | Methoxy | Methyl | H | Methyl |
| 1-18 | Methoxy | Methyl | Cl | Methyl |
| 1-19 | Methoxy | Methyl | H | n-Propyl |
| 1-20 | Methoxy | Methyl | H | n-Butyl |
| 1-21 | Methoxy | Methyl | H | Benzyl |
| 1-22 | Methoxy | Methyl | H | 2-Fluorobenzyl |
| 1-23 | Methoxy | Methyl | H | 3-Fluorobenzyl |
| 1-24 | Methoxy | Methyl | H | 4-Fluorophenyl |
| 1-25 | Methoxy | Methyl | H | 2-Methylphenyl |
| 1-26 | Methoxy | Methyl | H | 3-Methylphenyl |
| 1-27 | Methoxy | Methyl | H | 4-Methylphenyl |
| 1-28 | Methoxy | Methyl | Br | Methyl |
| 1-29 | Methoxy | Methyl | Br | n-Propyl |
| 1-30 | Methoxy | Methyl | Br | n-Butyl |
| 1-31 | Methoxy | Methyl | Br | Benzyl |
| 1-32 | Methoxy | Methyl | Br | 2-Fluorobenzyl |
| 1-33 | Acetoxy | Methyl | H | Methyl |
| 1-34 | Acetoxy | Methyl | Cl | Methyl |
| 1-35 | Acetoxy | Methyl | Br | Methyl |
| 1-36 | Hydroxy | Methyl | H | Methyl |
| 1-37 | Hydroxy | Methyl | Cl | Methyl |
| 1-38 | Hydroxy | Methyl | Br | Methyl |
| 1-39 | Pivaloyloxy | Methyl | H | Methyl |
| 1-40 | Pivaloyloxy | Methyl | Cl | Methyl |
| 1-41 | Pivaloyloxy | Methyl | Br | Methyl |
| 1-42 | Cl | Cl | H | Methyl |
| 1-43 | Cl | Cl | H | n-Propyl |
| 1-44 | Cl | Cl | H | n-Butyl |
| 1-45 | Cl | Cl | H | Benzyl |
| 1-46 | Cl | Cl | H | 2-Fluorobenzyl |
| 1-47 | Cl | Cl | H | 3-Fluorobenzyl |
| 1-48 | Cl | Cl | H | 4-Fluorophenyl |
| 1-49 | Cl | Cl | H | 2-Methylphenyl |
| 1-50 | Cl | Cl | H | 3-Methylphenyl |

(fortgesetzt)

| Nr. | $R^1$ | $R^2$ | $R^3$ | $R^4$ |
|---|---|---|---|---|
| 1-51 | Cl | Cl | H | 4-Methylphenyl |
| 1-52 | Cl | Cl | Br | Methyl |
| 1-53 | Cl | Cl | Br | n-Propyl |
| 1-54 | Cl | Cl | Br | n-Butyl |
| 1-55 | Cl | Cl | Br | Benzyl |
| 1-56 | Cl | Cl | Br | 2-Fluorobenzyl |
| 1-57 | Methyl | Methyl | H | Methyl |
| 1-58 | Methyl | Methyl | H | n-Propyl |
| 1-59 | Methyl. | Methyl | H | n-Butyl |
| 1-60 | Methyl | Methyl | H | Benzyl |
| 1-61 | Methyl | Methyl | H | 2-Fluorobenzyl |
| 1-62 | Methyl | Methyl | H | 3-Fluorobenzyl |
| 1-63 | Methyl | Methyl | H | 4-Fluorophenyl |
| 1-64 | Methyl | Methyl | H | 2-Methylphenyl |
| 1-65 | Methyl | Methyl | H | 3-Methylphenyl |
| 1-66 | Methyl | Methyl | H | 4-Methylphenyl |
| 1-67 | Methyl | Methyl | Br | Methyl |
| 1-68 | Methyl | Methyl | Br | n-Propyl |
| 1-69 | Methyl | Methyl | Br | n-Butyl |
| 1-70 | Methyl | Methyl | Br | Benzyl |
| 1-71 | Methyl | Methyl | Br | 2-Fluorobenzyl |

Als Mischungskomponente b) kommen die folgenden Amidverbindungen der Formel II in Frage,

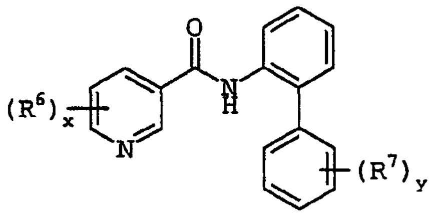

II

worin $R^6$ und $R^7$ gleich oder verschieden sind und für Halogen, Nitro, Cyano, $C_1$-$C_8$-Alkyl, $C_2$-$C_8$-Alkenyl, $C_2$-$C_8$-Alkinyl, $C_1$-$C_8$-Halogenalkyl, $C_2$-$C_8$-Halogenalkenyl, $C_2$-$C_8$-Halogenalkinyl, $C_1$-$C_8$-Alkoxy, $C_1$-$C_8$-Halogenalkoxy, $C_1$-$C_8$-Alkylthio, $C_1$-$C_8$-Halogenalkylthio, $C_1$-$C_8$-Alkylsulfinyl oder $C_1$-$C_8$-Alkylsulfonyl stehen;

x 1, 2, 3 oder 4; und

y 1, 2, 3, 4 oder 5 bedeuten.

Insbesondere sind Verbindungen II geeignet, in denen $R^6$ in 2-Stellung am Pyridinring und $R^7$ in 4-Stellung des terminalen Benzolrings vorliegen (Formel II.1):

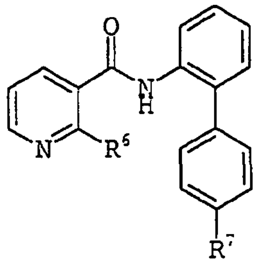

II.1

Besonders bevorzugt sind Verbindungen der Formel II.1, in denen die Kombination der Substituenten jeweils einer Zeile der folgenden Tabelle entspricht:

| Nr. | $R^6$ | $R^7$ |
|---|---|---|
| II-1 | F | F |
| II-2 | F | Cl |
| II-3 | F | Br |
| II-4 | Cl | F |
| II-5 | Cl | Cl |
| II-6 | Cl | Br |
| II-7 | $CF_3$ | F |
| II-8 | $CF_3$ | Cl |
| II-9 | $CF_3$ | Br |
| II-10 | $CF_2H$ | F |
| II-11 | $CF_2H$ | Cl |
| II-12 | $CF_2H$ | Br |
| II-13 | $CH_3$ | F |
| II-14 | $CH_3$ | Cl |
| II-15 | $CH_3$ | Br |
| II-16 | $OCH_3$ | F |
| II-17 | $OCH_3$ | Cl |
| II-18 | $OCH_3$ | Br |
| II-19 | $SCH_3$ | F |
| II-20 | $SCH_3$ | Cl |
| II-21 | $SCH_3$ | Br |
| II-22 | $S(O)CH_3$ | F |
| II-23 | $S (O) CH_3$ | Cl |
| II-24 | $S(O)CH_3$ | Br |
| II-25 | $SO_2CH_3$ | F |
| II-26 | $SO_2CH_3$ | Cl |
| II-27 | $SO_2CH_3$ | Br |

Besonders bevorzugt werden die Verbindungen II.1, in denen $R^6$ für $CF_3$ oder Halogen und $R^7$ für Halogen stehen.

Bevorzugt sind fungizide Mischungen die als Komponente a) eine der Verbindungen: 1-33, 1-35, 1-42, 1-44, 1-46, 1-60, oder vorzugsweise 1-18, 1-28, 1-37, und als Komponente b) eine der Verbindungen: II-7, 11-8 oder vorzugsweise 11-4, II-5 enthalten.

Die Verbindungen II sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Kohlensäure, Schwefelsäure, Phosphorsäure und Salpetersäure.

Als organischen Säuren kommen beispielsweise Ameisensäure, und Alkansäuren wie Essigsäure, Trifluoressigsäure, Trichloressigsäure und Propionsäure sowie Glycolsäure, Milchsäure, Bernsteinsäure, Zitronensäure, Benzoesäure, Zimtsäure, Oxalsäure, p-Toluolsulfonsäure, Salizylsäure, p-Aminosalizylsäure, 2-Phenoxybenzoesäure oder 2-Acetoxybenzoesäure.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudocercosporella-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:20, insbesondere 10:1 bis 1:10, vorzugsweise 5:1 bis 1:5 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen für die Verbindungen I liegen entsprechend bei 0,005 bis 3,0 kg/ha, vorzugsweise 0,02 bis 2,0 kg/ha, insbesondere 0,04 bis 1,0 kg/ha.

Die Aufwandmengen liegen dabei für die Verbindungen II bei 0,005 bis 5.kg/ha, vorzugsweise 0,08 bis 3,0 kg/ha, insbesondere 0,06 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha)\cdot 100/\beta$$

- $\alpha$ entspricht dem Pilzbefall der behandelten Pflanzen in % und
- $\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Anwendungsbeispiel 1: Protektive Wirksamkeit gegen den durch *Sphaerotheca fuliginea* verursachten Gurkenmehltau

Blätter von in Töpfen gewachsenen Gurkenkeimlingen der Sorte "Chinesische Schlange" wurden im Keimblattstadium mit wäßriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht. 20 Stunden nach dem Antrocknen des Spritzbelages wurden die Pflanzen mit einer wäßrigen Sporensuspension des Gurkenmehltaus *(Sphaerotheca fuliginea*) inokuliert. Anschließend wurden die Pflanzen im Gewächshaus bei Temperaturen zwischen 20 und 24° C und 60 bis 80 % relativer Luftfeuchtigkeit für 7 Tage kultiviert. Dann wurde das Ausmaß der Mehltauentwicklung visuell in %-Befall der Keimblattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgrade verglichen.

Tabelle A

| **Wirkstoff** | **Wirkstoffkonzentration in der Spritzbrühe in ppm** | **Wirkungsgrad in % der unbehandelten Kontrolle** |
|---|---|---|
| Kontrolle (unbehandelt) | (83 % Befall) | 0 |
| Verbindung 1-28 | 0,125 | 52 |
| Verbindung 1-37 | 0,5<br>0,25<br>0,125 | 27<br>3<br>3 |
| Verbindung 11-5 | 0,5<br>0,25<br>0,125 | 70<br>52<br>40 |

Tabelle B

| **erfindungsgemäße Kombinationen** | **beobachteter Wirkungsgrad** | **Berechneter Wirkungsgrad*)** |
|---|---|---|
| Verbindung 1-28 + Verbindung II-5 0,125 + 0,25 ppm Mischung 1 : 2 | 100 | 77 |
| Verbindung 1-37 + Verbindung 11-5 0,25 + 0,5 ppm Mischung 1 : 2 | 94 | 71 |
| Verbindung I-37 + Verbindung in-5 0,125 + 0,25 ppm Mischung 1 : 2 | 100 | 53 |
| Verbindung 1-37 + Verbindung 11-5 0,5 + 0,25 ppm Mischung 2 : 1 | 94 | 65 |
| Verbindung I-37 + Verbindung II-5 0,25 + 0,125 ppm Mischung 2 : 1 | 88 | 42 |
| *) berechnet nach der Colby-Formel | | |

Aus den Ergebnissen des Versuches geht hervor, daß der beobachtete Wirkungsgrad in allen Mischungsverhältnissen höher ist, als der nach der Colby-Formel vorausberechnete Wirkungsgrad (aus Synerg 166A. XLS).

**Patentansprüche**

**1.** Fungizide Mischungen, enthaltend

a) Benzophenone der Formel I,

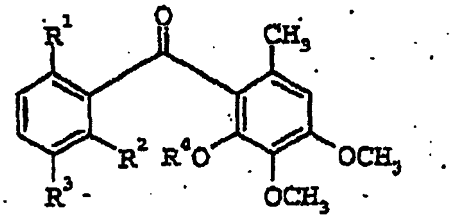

I

in der

$R^1$ für Chlor, Methyl, Methoxy, Acetoxy, Pivaloyloxy oder Hydroxy;
$R^2$ für Chlor oder Methyl;
$R^3$ für Wasserstoffe Halogen oder Methyl; und
$R^4$ für $C_1$-$C_6$ Alkyl, oder Benzyl stehen, wobei der Phenylteil des Benzylrestes einen Halogen oder Metbylsubstituenten tragen kann, und

b) Amidverbindungen der Formel II

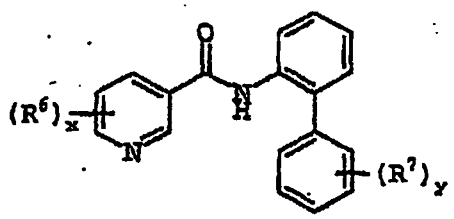

II.

worin $R^6$ und $R^7$ gleich oder verschieden sind und für Halogen, Nitro, Cyano, $C_1$-$C_8$-Alkyl, $C_2$-$C_8$-Alkenyl, $C_2$-$C_8$-Alkinyl, $C_1$-$C_8$-Halogrenalkyl, $C_2$-$C_8$-Halogenalkenyl, $C_2$-$C_8$-Halogenalkinyl, $C_1$-$C_8$-AUccxy, $C_1$-$C_8$-Halogenalkoxy, $C_1$-$C_8$-Alkylthio, $C_1$-$C_8$-Halogenalkylthio, $C_1$-$C_8$Alkylsulfinyl oder $C_1$-$C_8$-Alkylsulfonyl stehen;
x 1, 2, 3 oder 4, und
y 1, 2, 3, 4 oder 5 bedeuten;
in einer synergistisch wirksamen Menge.

**2.** Fungizide Mischungen nach Anspruch 1, wobei in Formel I

$R^1$ für Methoxy; Acetoxy oder Hydroxy;
$R^2$ für Methyl;
$R^3$ für Wasserstoff, Chlor oder Brom; und
$R^4$ für $C_1$-$C_4$-Alkyl steht.

**3.** Fungizide Mischungen nach Anspruch 1, wobei als Mischüngskomponente b) Verbindungen der Formel In.1 eingesetzt werden,

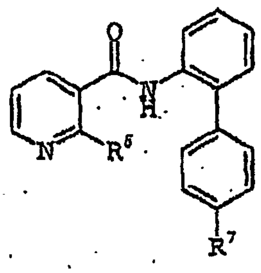

II.1

worin $R^6$ für Halogen, Halogenmethyl, Methyl, Methoxy, Methylthio, Methylsulfinyl oder methylsulfonyl steht und $R^7$ Halogen oder Cyano bedeutet.

4. Fungizide Mischung nach Anspruch 1, **dadurch gekennzeichnet, daß** das Gewichtsverhältnis der Benzophenone 1 zu den Amidverbindungen der Formel II 20:1 bis 1:20 beträgt

5. Verfahren zur Bokämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit Benzophenonen der Formel 1 gemäß Anspruch 1 und Amidverbindungen der Formel-II gemäß Anspruch 1 in einer synergistisch wirksamen Menge behaudelt.

6. Verfahren nach Anspruch 5, **dadurch gekennzeichnet, daß** man Benzophenone der Formel I gemäß Anspruch 1 und Amidverbindungen der Formel II gemäß Anspruch 2 gleichzeitig, und zwar gemeinsam oder getrennt, oder nacheinander ausbringt.

7. Verfahren nach Anspruch 5 oder 6, **dadurch gekennzeichnet**, das man die Benzophenone der Formel 1 gemäß Anspruch,1. in einer Menge von 0,02 bis 2.0 kg/ha aufwendet.

8. Verfahren nach den Ansprüchen 5 bis 7, **dadurch gekennzeichnet, daß** man die Amidverbindungen der Formel II gemäß Anspruch 1 in einer Menge von 0,08 bis 3,0 kg/ha aufwendet.

9. Mittel nach Anspruch-1, das in zwei Teilen konditioniert ist, wobei der eine Teil Benzophenone der Formel I gemäß Anspruch 1 in einem festen oder flüssigen Träger enthält und der andere Teil Amidverbindungen der Formel II gemäß Anspruch 1 in einem festen oder flüssigen Träger in einer synergistisch wirksamen Menge enthält

## Claims

1. A fungicidal mixture, comprising

a) benzophenones of the formula 1,

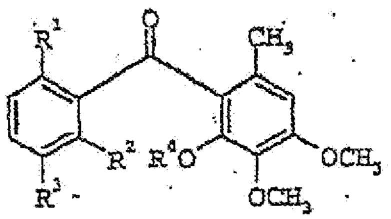

I

in which

$R^1$ is chlorine, methyl, methoxy, acetoxy, pivaloyloxy or hydroxyl;
$R^2$ is chlorine or methyl;
$R^3$ is hydrogen, halogen or methyl; and
$R^4$ is $C_1$-$C_5$-alkyl or benzyl, where the phenyl moiety of the benzyl radical may carry a halogen or methyl

substituent, and

b) 1 amide compounds of she formula II

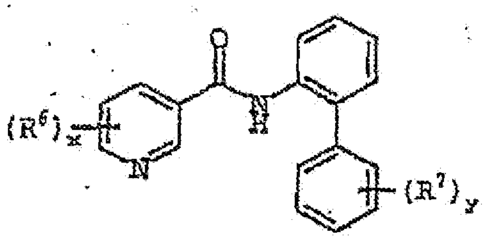

II.

in which $R^6$ and $R^7$ are identical or different and are halogen, nitro, cyano, $C_1$-$C_8$-alkyl, $C_2$-$C_8$-alkenyl, $C_2$-$C_8$-alkynyl, $C_1$-$C_8$haloalkyl, $C_2$-$C_8$-haloalkenyl, $C_2$-$C_8$-haloalkyryl, $C_1$-$C_8$-alkoxy, $C_1$-$C_8$-haloalkoxy, $C_1$-$C_8$-alkylthio, $C_1$-$C_8$-halcalkylthio, $C_1$-$C_8$-alkylsulfinyl or $C_1$-$C_8$-alkylsulfonyl;

x is 1, 2, 3 or 4; and
y is 1, 2, 3, 4 or 5;

in a synergistically effective amount.

**2.** The fungicidal mixture according to claim 1, where in formula I

$R^1$ is methoxy, acetoxy or hydroxyl;
$R^2$ is methyl;
$R^3$ is hydrogen, chlorine or bromine and
Tri is $C_1$-$C_4$-alkyl.

**3.** The fungicidal mixture according to claim 1, where the mixing components b) used are compounds of the formula II.1

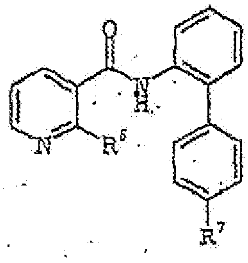

II.1

in which $R^6$ is halogen, halomethyl, methyl, methoxy, methylthio, methylsulfinyl or methylsulfonyl and $R^7$ is halogen or cyano.

**4.** The fungicidal mixture according to claim 1, wherein the weight ratio of the benzophenones I to the amide compounds of the formula II is from 20:1 to 1:20.

**5.** A method for controlling harmful fungi, which comprises treating the harmful fungi, their habitat or the plants, seeds, soils, areas, materials or spaces to be kept free from them with benzophenones of the formula I as set forth in claim 1 and amide compounds of the formula II as set forth in claim 1 in a synergistically effective amount.

**6.** The method according to claim 5, wherein benzophenones of the formula I as set forth in claim 1 and amide compounds of the formula II, as set forth in claim 1 are assigned simultaneously, that is either together or separately, or successively.

**7.** The method according to claim 5 or 6, therein the benzophenones of the formula I as set forth in claim 1 are applied

in an amount of from 0.02 to 2.0 kg/ha.

**8.** The method according to any of claims 5 to 7, wherein the amide compounds of the formula II as set forth in claim 1 are applied in an amount of from 0,08 to 3.0 kg/ha.

**9.** The composition according to claim 1, which is conditioned in two parts, one part comprising benzophenones of the formula I as set forth in claim 1 in a. solid or liquid carrier and the other part comprising amide compounds of the formula II as set forth in claim 1 in a solid ot liquid carrier in a synergistically effective amount.

**Revendications**

**1.** Mélanges fongicides, contenant

a) des benzophénones de formule I,

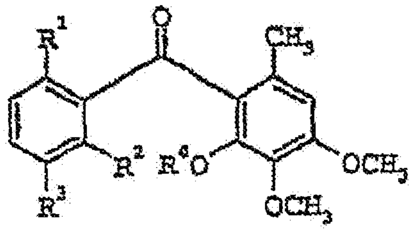

I

dans laquelle

$R^1$ représente un atome de chlore ou le groupe méthyle méthoxy, acétoxy pivaloyloxy ou hydroxy ;
$R^2$ représente un atome de chlore ou le groupe méthyle ;
$R^3$ représente un atome d'hydrogène ou d'halogène ou le groupe méthyle ; et
$R^4$ représente un groupe allyle en $C_1$-$C_6$ ou benzyle, le fragment phényle du radical benzyle pouvant porter un substituant halogéno ou méthyle, et

b) des composés de type amide de formule II

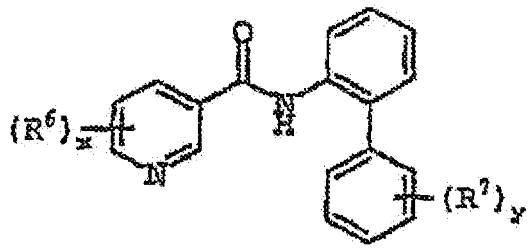

II

dans laquelle $R^6$ et $R^7$ sont identiques ou différents et représentent un atome d'halogène, un groupe nitro, cyano, alkyle en $C_1$-$C_8$, alcényle en $C_2$-$C_8$ alcynyle en $C_2$-$C_8$, halogénoalkyle en $C_1$-$C_8$, ,halogénoalcényle en $C_2$-$C_8$, halogénoalcycnyle en $C_2$-$C_8$, alcoxy en $C_1$-$C_8$, halogénoalcoxy en $C_1$-$C_8$, alkyl ($C_1$-$C_9$)-thio, halogénoalkyl($C_1$-$C_8$) thio, alkyl($C_1$-$C_8$)-sulfinyle ou alkyl ($C_1$-$C_8$) sulfonyle ;

x représente 1, 2, 3 ou 4 ; et
y représente 1, 2, 3, 4 ou 5 ;

en une quantité à effet synergique.

**2.** Mélanges fongicides selon la revendication 1, dans lesquels, dans la formule 1

$R^1$ représente le groupe méthoxy, acétoxy ou hydroxy ;
$R^2$ représente le groupe méthyle ;
$R^3$ représente un atome d'hydrogène, de chlore ou de brome ; et
$R^4$ représente un groupe alkyle en $C_1$-$C_4$.

**3.** Mélanges fongicides selon la revendication 1, dans lesquels on utilise en tant que composant b) du mélange des composés de formule II.1,

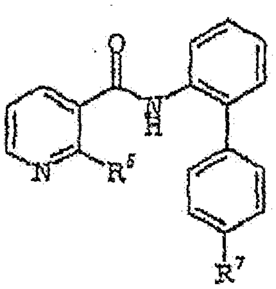

II.1

dans laquelle $R^6$ représente un atome d'halogène ou un groupe halogénométhyle, méthyle, méthoxy, méthylthio, mëthylsulfinyle ou méthylsulfonyle et $R^7$ représente une atome d'halogène ou le groupe cyano.

**4.** Mélange fongicide selon la revendication 1, **caractérisé en ce que** le rapport pondéral des benzophénones I aux composés de type amide de formule II va de 20:1 à 1:20.

**5.** Procédé pour la lutte contre des champignons nuisibles, 1 **caractérisé en ce qu'**on traite par des benzophénones de formule I selon la revendication 1 et des composés de type amide de formule II selon la revendication 1, en une quantité à effet synergique, les champignons nuisibles, leur habitat ou les plantes, semences, sols, surfaces, matériaux ou espaces à protéger contre eux.

**6.** Procédé selon la revendication 5, **caractérisé en ce qu'**on applique simultanément, à savoir ensemble ou séparément, ou successivement les benzophénones de formule 1 selon la revendication 1 et des composés de type amide de formule II selon la revendication 1.

**7.** Procédé selon la revendication 5 ou 6, **caractérisé en ce qu'**on applique les benzophénones de formule I selon la revendication 1 en une quantité de 0,02 à 2,0 kg/ha.

**8.** Procédé selon les revendications 5 à 7, **caractérisé en ce qu'**on applique les composés de type amide de formule II selon la revendication 1 en une quantité de 0,08 à 3,0 kg/ha.

**9.** Composition selon la revendication 1, qui est conditionnée en deux parties, une partie contenant des benzophénones de formule I selon la revendication 1 dans un support solide ou liquide et l'autre partie contenant des composés de type amide de formule II selon la revendication 1, dans un support solide ou liquide, 1 en une quantité à effet synergique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 727141 A
- EP 897904 A
- EP 899255 A
- EP 967196 A
- EP 1023834 A
- EP 545099 A


### In der Beschreibung aufgeführte Nicht-Patentliteratur


- **R.S. Colby.** *Weeds,* 1967, vol. 15, 20-22
- **Colby, S. R.** Calculating synergistic and antagonistic responses of herbicide Combinations. *Weeds,* 1967, vol. 15, 20-22